# EUROPEAN PATENT APPLICATION

(11) **EP 4 625 626 A1**
(43) Date of publication of application: **01.10.2025**
(21) Application number: 25164915.8
(22) Date of filing: 20.03.2025
(51) Int. Cl.: H01M 50/103, H01M 50/176, H01M 50/184, H01M 50/186, H01M 50/198

(54) **SECONDARY BATTERY**

(30) Priority: 25.03.2024 KR 20240040226
(71) Applicant: SAMSUNG SDI CO., LTD., Yongin-si, Gyeonggi-do 17084 (KR)
(72) Inventor: HONG, Suk Joon, Yongin-si, Gyeonggi-do 17084 (KR)
(74) Representative: Michalski Hüttermann & Partner Patentanwälte mbB

(57) **Abstract**

A secondary battery is provided that is has reduced production cost. The secondary battery includes an electrode assembly, including a first electrode plate, a second electrode plate, and a separator. A first case surrounds a first surface of the electrode assembly, and a second case surrounds a second surface of the electrode assembly that is opposite to the first surface. An insulating gasket is positioned between the first case and the second case and coupled to at least one of the first case or the second case. The first case and the second case are coupled to each other with an interference fit with the insulating gasket interposed between the first case and the second case.

## Description

### BACKGROUND

### 1. Field

The present disclosure relates to a secondary battery.

### 2. Description of the Related Art

Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. The secondary battery includes an electrode assembly consisting of a positive electrode and a negative electrode, a case accommodating the same, and electrode terminals connected to the electrode assembly.

The above information disclosed in this Background section is only for enhancement of understanding of the background of the invention and therefore it may contain information that does not constitute prior art.

### SUMMARY

The present disclosure provides a secondary battery that has reduced production cost by coupling a first case and a second case to each other with an interference fit.

However, the technical problems to be achieved in the embodiment of the disclosure are not limited to the technical problems mentioned above, and other technical problems not mentioned herein will be clearly understood from the following description by those skilled in the art to which the disclosure belongs.

In order to accomplish the above objective, an exemplary secondary battery according to an embodiment of the present disclosure includes an electrode assembly, including a first electrode plate, a second electrode plate, and a separator, a first case surrounding a first surface of the electrode assembly, a second case surrounding a second surface of the electrode assembly that is opposite to the first surface, and an insulating gasket positioned between the first case and the second case and coupled to at least one of the first case or the second case.

In some examples, the first case and the second case may be coupled to each other with an interference fit with the insulating gasket interposed between the first case and the second case.

In some examples, the insulating gasket may include at least one of polypropylene, polybutylene terephthalate, polyethylene, ethylene propylene diene terpolymer (EPDM), polyimide, TEFLON^{®} (polytetrafluoroethylene), and polyester.

In some examples, the electrode assembly may be accommodated in the second case, and the first case may cover an upper side of the second case with the insulating gasket interposed between the first case and the second case.

In some examples, the length of the second case in a vertical direction may be greater than the length of the electrode assembly in the vertical direction.

In some examples, the insulating gasket may be fixed on an upper end portion of the second case.

In some examples, the insulating gasket may include an inner gasket abutting an inner surface of the second case, an outer gasket abutting an outer surface of the second case, and a connection gasket connecting the inner gasket and the outer gasket.

In some examples, the length of the outer gasket in the vertical direction may be greater than the length of the inner gasket in the vertical direction.

In some examples, the first case may include a first case body configured to cover an upper side of the electrode assembly and a first extension member extending downward from an edge of the first case body and positioned outside the outer gasket.

In some examples, the second case may include a second case body configured to cover a lower side of the electrode assembly and a second extension member extending upward from an edge of the second case body and positioned between the outer gasket and the inner gasket.

In some examples, at least one of the first case or the second case may be formed as a conductor.

In some examples, the insulating gasket may be made of an insulative material, and the first case and the second case may be electrically disconnected from each other.

In order to accomplish the above objectives, an exemplary secondary battery according to an embodiment of the present disclosure includes an electrode assembly, including a first electrode plate, a second electrode plate, and a separator, a first case surrounding an upper surface of the electrode assembly, a second case surrounding a lower surface of the electrode assembly, and an insulating gasket coupled to an end portion of at least one of the first case or the second case.

In some examples, the insulating gasket may be elastic, and the first case and the second case may be coupled to each other with an interference fit with the insulating gasket interposed between the first case and the second case.

In some examples, the secondary battery may further include a first connection tab electrically connected to the first electrode plate and a first insulating tape attached to an outer side of the first connection tab.

In some examples, the first connection tab and the first insulating tape may be located between the first case and the insulating gasket, and an end portion of the first connection tab may extend to outside of the first case.

In some examples, the secondary battery may further include a second connection tab electrically connected to the second electrode plate and a second insulating tape attached to an outer side of the second connection tab.

In some examples, the second connection tab and the second insulating tape may be positioned between the first case and the insulating gasket, and an end portion of the second connection tab may extend to outside of the first case.

In some examples, the insulating gasket may include an inner gasket abutting an inner surface of the second case, an outer gasket abutting an outer surface of the second case, and a connection gasket connecting the inner gasket and the outer gasket.

In some examples, the insulating gasket may further include an outer protrusion, and the outer protrusion may include a plurality of protrusions protruding outward from the outer gasket so as to be in contact with the first case.

In some examples, the insulating gasket may further include a fixing protruding portion protruding outward from the outer gasket so as to surround an end portion of the first case.

In some examples, the inner gasket and the outer gasket may be mounted parallel to each other with the second case interposed between the inner gasket and the outer gasket.

### BRIEF DESCRIPTION OF THE DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings.
FIGs. 1 and 2 are, respectively, a perspective view and a cross-sectional view showing an exemplary secondary battery according to the present disclosure;
FIG. 3 is a cross-sectional view showing the configuration of the exemplary secondary battery according to the present disclosure in an exploded manner;
FIG. 4 is an exploded perspective view of the exemplary secondary battery according to the present disclosure;
FIG. 5 is a cross-sectional view of an exemplary electrode assembly according to the present disclosure;
FIG. 6 is a perspective view showing an exemplary insulating gasket according to the present disclosure;
FIG. 7 is a cross-sectional view showing the exemplary insulating gasket according to the present disclosure;
FIG. 8 is a cross-sectional view showing the exemplary insulating gasket provided with an outer protrusion according to the present disclosure;
FIG. 9 is a cross-sectional view showing the exemplary insulating gasket provided with a fixing protruding portion according to the present disclosure;
FIG. 10 is a perspective view showing an exemplary secondary battery according to the present disclosure;
FIG. 11 is an exploded perspective view of the exemplary secondary battery according to the present disclosure;
FIGs. 12A and 12B are perspective views showing a battery pack including the exemplary secondary battery according to the present disclosure; and
FIGs. 13A and 13B are, respectively, a perspective view and a side view showing a vehicle body and a vehicle including the exemplary battery pack according to the present disclosure.

### DETAILED DESCRIPTION OF EXEMPLARY EMBODIMENTS

Hereinafter, the present disclosure will be described in detail. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe the disclosure in the best way possible. Therefore, the embodiments described in the specification and the configurations described in the drawings are only the most preferred embodiments of the present disclosure, and do not represent all of the technical ideas of the present disclosure. It is to be understood that there may be various equivalents and variations in place of them at the time of filing the present application. In addition, as used herein, the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. In addition, when describing embodiments of the present disclosure, "can" and "may" may include "one or more embodiments of the present disclosure."

In addition, for a better understanding of the invention, The attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, unless otherwise defined, a first element, component, region, layer or section described below could be termed a second element, component, region, layer or section, without departing from the scope of the present disclosure.

Throughout the specification, each component may be singular or plural, unless the context clearly indicates otherwise.

The arrangement of an arbitrary component on the "upper portion (or lower portion)" or "upper (or lower) portion" of a component means that an arbitrary component is placed in contact with the upper (or lower) surface of the component. In addition, it may mean that other components may be interposed between the component and any component disposed on (or under) the component.

Also, it will be understood that when an element is referred to as being "connected to," "coupled to," or "linked to" another element, these elements can be directly connected or coupled to each other, another intervening element may be present therebetween, or the respective elements may be connected, coupled, or linked to each other through another elements.

Throughout the specification, the expression "A and/or B" means A, B, or A and B, unless otherwise defined. That is, as used herein, the term "and/or" includes any and all combinations of one or more of the associated listed items. The expression "C to D" means C or more and D or less, unless otherwise defined.

As used herein, the terms are for describing embodiments of the present disclosure and are not intended to limit the disclosure.

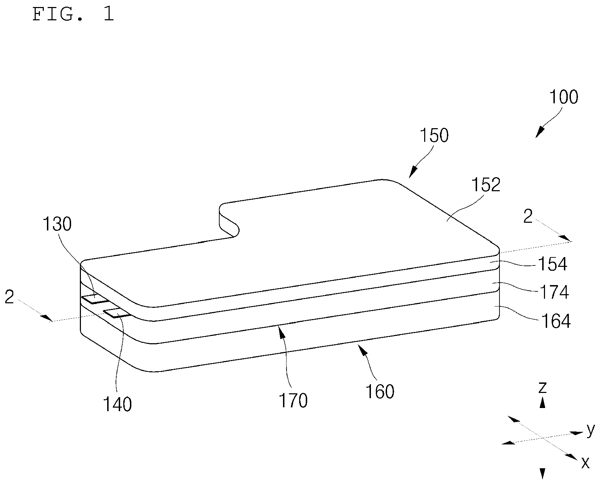

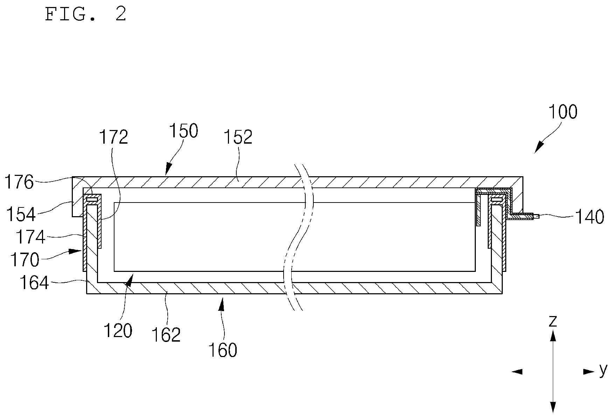

FIGs. 1 and 2 are, respectively, a perspective view and a cross-sectional view showing an exemplary secondary battery 100 according to the present disclosure. FIG. 2 is a cross-sectional view taken along line 2-2 in FIG. 1. As shown in FIGs. 1 and 2, the exemplary secondary battery 100 according to the present disclosure may include an electrode assembly 120, a first case 150, a second case 160, and an insulating gasket 170. In some examples, the exemplary secondary battery 100 according to the present disclosure may further include at least one of a first connection tab 130, a second connection tab 140, a first insulating tape 135, and a second insulating tape 145. In the present disclosure, the secondary battery 100 may be referred to as a battery.

In some examples, the electrode assembly 120 and the first and second cases 150 and 160, which constitute a case accommodating the electrode assembly 120, may be formed in an "L" shape. That is, the electrode assembly 120, the first case 150, and the second case 160 may be formed in an irregular shape. The exemplary secondary battery 100 according to the present disclosure may be formed in an "L" shape, rather than being formed in a spherical or hexahedral shape. In other embodiments, the electrode assembly 120, the first case 150, and the second case 160 may be modified into various irregular shapes other than the "L" shape. Thus, the exemplary secondary battery 100 according to the present disclosure is flexible and versatile with respect to the design of battery-powered devices.

As described above, the electrode assembly 120, the first case 150, and the second case 160 may be modified into various shapes, and the first case 150 and the second case 160 may be coupled to each other in an interference fit manner outside the electrode assembly 120. Because the electrode assembly 120, the first case 150, and the second case 160 are formed in an irregular shape, it is possible to further diversify the shape of the secondary battery 100, to maximize the efficiency of use of internal space in an electronic device, and to be consistent with the trend toward large-capacity secondary batteries.

The first case 150 and the second case 160 may be mounted with the insulating gasket 170 interposed therebetween, accommodate the electrode assembly 120 and an electrolyte, and define the external appearance of the secondary battery 100. Each of the first case 150 and the second case 160 may include or be referred to as a can, a housing, or an exterior body. The first case 150 and the second case 160 may be formed of a metal, such as steel, stainless steel (SUS), nickel-plated steel, a steel alloy, aluminum, an aluminum alloy, or deep-drawing cold-rolled steel (SPCE), or be formed of a laminated film or plastic composing a pouch. At least one of the first case 150 or the second case 160 may be provided with a beading portion (not shown) that is depressed inwardly. The beading portion may protrude toward the interior of the first case 150 and the second case 160 to suppress movement of the electrode assembly 120.

The electrode assembly 120 may be accommodated together with an electrolyte in a space defined by the first case 150 and the second case 160. The electrode assembly 120 may include or be referred to as an electrode group, an electrode body, or a jellyroll. The electrode assembly 120 may include a first electrode plate 121, a second electrode plate 122, and a separator 123 interposed between the first electrode plate 121 and the second electrode plate 122. The components of the electrode assembly 120 may be stacked in a plate shape. The electrode assembly 120 may be formed in various configurations, for example, a stacked configuration or a cylindrically wound configuration. In some embodiments, a plurality of the first electrode plate 121, a plurality of the second electrode plate 122, and a plurality of the separator 123 may be provided. The electrode assembly 120 may be configured such that the first electrode plate 121, the separator 123, and the second electrode plate 122 are stacked in that order. In some examples, the electrode assembly 120 may be configured such that the first electrode plate 121, the second electrode plate 122, and the separator 123, each of which has a plate shape including a small-width portion and a large-width portion consecutively connected to each other, are stacked. The first electrode plate 121, the second electrode plate 122, and the separator 123 may be formed as an L-shaped plate.

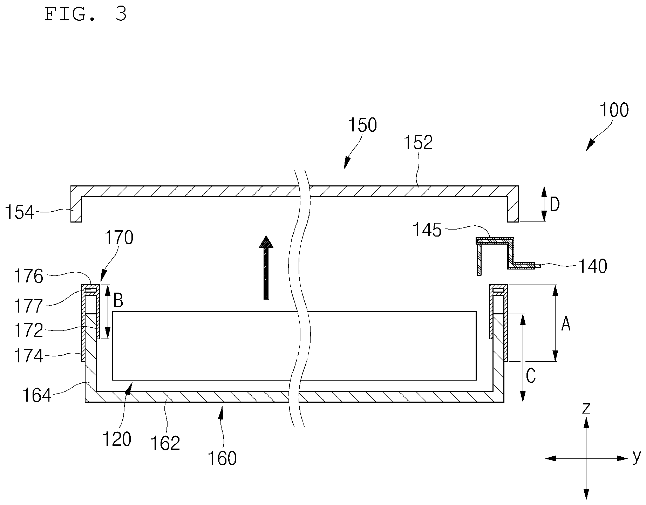

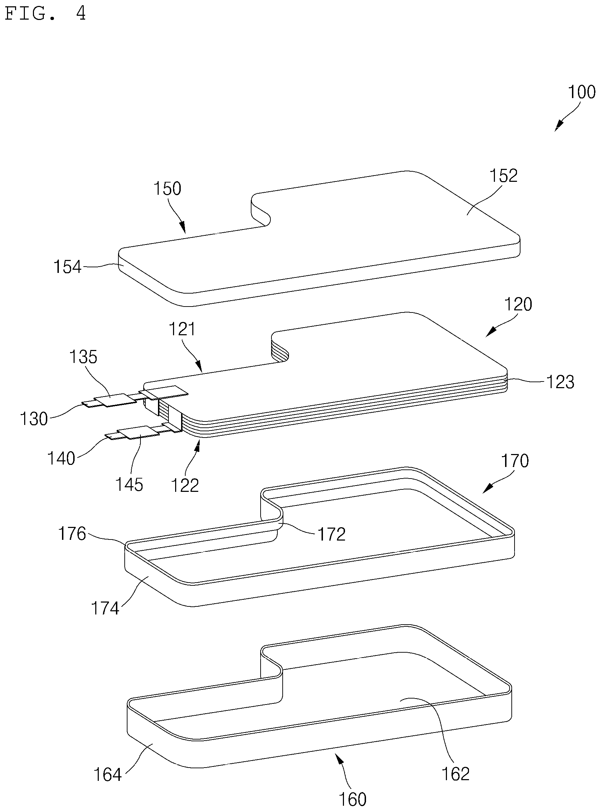

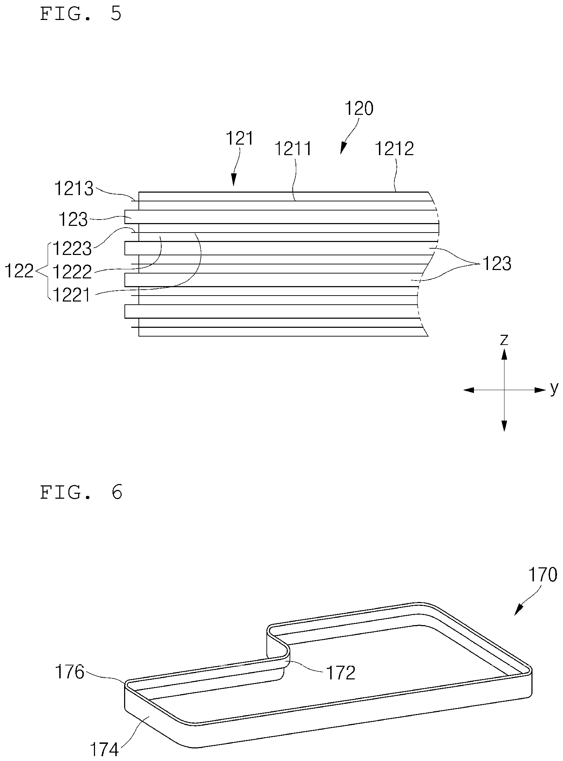

FIG. 3 is a cross-sectional view showing the configuration of the exemplary secondary battery 100 according to the present disclosure in an exploded manner, FIG. 4 is an exploded perspective view of the exemplary secondary battery 100 according to the present disclosure, and FIG. 5 is a cross-sectional view of the exemplary electrode assembly 120 according to the present disclosure. As shown in FIGs. 3 to 5, the first electrode plate 121 may include a first substrate 1211 and a first active material layer 1212 located on the first substrate 1211. The first substrate 1211 may include a first uncoated portion or a first tab 1213 on which the first active material layer 1212 is not provided. The first uncoated portion or the first tab 1213 of the first substrate 1211 may extend outward (e.g., in a lateral direction), and the first tab 1213 may be electrically connected to the first connection tab 130. In the present disclosure, the first tab 1213 may be referred to as a first uncoated portion or a positive electrode substrate tab.

The second electrode plate 122 may include a second substrate 1221 and a second active material layer 1222 located on the second substrate 1221. The second substrate 1221 may include a second uncoated portion or a second tab 1223 on which the second active material layer 1222 is not provided. The second uncoated portion or the second tab 1223 of the second substrate 1221 may extend outward (e.g., in a lateral direction), and the second tab 1223 may be electrically connected to the second connection tab 140. In some examples, the first tab 1213 and the second tab 1223 may be implemented in various forms, for example, the tabs 1213 and 1223 may extend in the same direction or may extend in different directions. In the present disclosure, the second tab 1223 may be referred to as a second uncoated portion or a negative electrode substrate tab.

The first electrode plate 121 may function as a positive electrode. In such a case, the first substrate 1211 may be formed as, for example, an aluminum foil, and the first active material layer 1212 may include, for example, a transition metal oxide. The second electrode plate 122 may function as a negative electrode. In such a case, the second substrate 1221 may be formed as, for example, a copper foil or a nickel foil, and the second active material layer 1222 may include, for example, graphite and/or silicon.

The separator 123 may prevent short circuit between the first electrode plate 121 and the second electrode plate 122 while allowing lithium ions to move between the plates 121 and 122. In some examples, the separator 123 may be located on each of two opposite side surfaces of the first electrode plate 121 or may be located on each of two opposite side surfaces of the second electrode plate 122.

As the positive electrode active material, a compound capable of reversibly intercalating /deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}XₑO_{2-c}D_{c} (0.90≤a≤1.8, 0≤b≤0.5, 0≤c≤0.05) ; LiₐMn_{2-b}XeO_{4-c}D_{c}(0.90≤a≤1.8, 0≤b≤0.5, 0≤c≤0.05) ; LiₐNi_{1-b-c}CO_{b}X_{c}O_{2-α}D_{α}, (0.90≤a≤1.8, 0≤b≤0.5, 0≤c≤0.5, 0<α<2) ; LiₐNi_{1-b-c}Mn_{b}X_{c}O_{2-α}D_{α}(0.90≤a≤1.8, 0≤b≤0.5, 0≤c≤0.5, 0<α<2) ; LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1) ; LiₐMn₂GeO₄ (0.90≤a≤1.8, 0.001≤b≤0.1) ; LiₐMn₁-_{g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The first connection tab 130 may be electrically connected to the first electrode plate 121. The first connection tab 130 may extend above the electrode assembly 120 to be electrically connected to the first case 150 or may be led out between the first case 150 and the insulating gasket 170 to protrude to outside of the first case 150. The first connection tab 130 may be electrically connected to the first tab 1213 provided at the first electrode plate 121. One side of the first connection tab 130 may be electrically connected to the first electrode plate 121 of the electrode assembly 120, and the other side of the first connection tab 130 may extend to outside of the first case 150 through a space between the first case 150 and the insulating gasket 170. The first connection tab 130 may be connected to one side (left side in FIG. 4) of the first electrode plate 121 in the longitudinal direction of the first electrode plate 121. In some examples, the first connection tab 130 may be a band-shaped conductor. A plurality of first tabs 1213 extending/protruding from the electrode assembly 120 may be electrically connected to one side of the first connection tab 130. The first connection tab 130 may be formed from, for example, copper, a copper alloy, nickel, a nickel alloy, aluminum, or an aluminum alloy.

The first insulating tape 135 may be attached to the outer side of the first connection tab 130 and may include an insulative material. The first connection tab 130 and the first insulating tape 135 may be located between the first case 150 and the insulating gasket 170, and an end portion of the first connection tab 130 may extend to outside of the first case 150.

The first insulating tape 135 may include at least one of polypropylene, polyethylene, ethylene propylene diene terpolymer (EPDM), polyimide, TEFLON ^{®} (i.e., polytetrafluoroethylene), or polyester, none of which reacts with the electrolyte. Polyimide has excellent heat resistance and electrical insulation performance and is chemically stable, thereby exhibiting excellent insulation performance in the chemical environment in a battery. TEFLON^{®} has high heat resistance, is chemically stable, and has excellent electrical insulation performance. Polyethylene is flexible and has good electrical insulation performance and durability. Polyester has excellent durability and is electrically and chemically stable. Polypropylene is an economical and durable material. EPDM is a thermally and chemically stable rubber that is mainly used as an insulating and sealing material.

Because the first insulating tape 135 is attached to the outer side of the first connection tab 130, the first connection tab 130 and the first case 150 may be electrically insulated from each other.

The second connection tab 140 may be electrically connected to the second electrode plate 122. The second connection tab 140 may extend below the electrode assembly 120 to be electrically connected to the second case 160 or may be led out between the first case 150 and the insulating gasket 170 to protrude to the outside of the first case 150. The second connection tab 140 may be electrically connected to the second tab 1223 provided with the second electrode plate 122. One side of the second connection tab 140 may be electrically connected to the second electrode plate 122 of the electrode assembly 120, and the other side of the second connection tab 140 may extend to outside of the first case 150 through a space between the first case 150 and the insulating gasket 170. The second connection tab 140 may be connected to one side (left side in FIG. 4) of the second electrode plate 122 in the longitudinal direction of the second electrode plate 122. In some examples, the second connection tab 140 may be a band-shaped conductor. A plurality of second tabs 1223 extending/protruding from the electrode assembly 120 may be electrically connected to one side of the second connection tab 140. The second connection tab 140 may be formed from, for example, copper, a copper alloy, nickel, a nickel alloy, aluminum, or an aluminum alloy.

The second insulating tape 145 may be attached to the outer side of the second connection tab 140 and may include an insulative material. The second connection tab 140 and the second insulating tape 145 may be located between the first case 150 and the insulating gasket 170, and an end portion of the second connection tab 140 may extend to outside of the first case 150.

The second insulating tape 145 may include at least one of polypropylene, polyethylene, ethylene propylene diene terpolymer (EPDM), polyimide, TEFLON^{®}, or polyester, none of which reacts with the electrolyte.

Because the second insulating tape 145 is attached to the outer side of the second connection tab 140, the second connection tab 140 and the first case 150 may be electrically insulated from each other.

The first case 150 may be variously configured so long as the first case 150 is formed in a shape surrounding one surface of the electrode assembly 120 and is electrically connected to the first electrode plate 121. In some examples, the first case 150 may cover the upper side of the electrode assembly 120. The first case 150 according to an embodiment of the present disclosure may include a first case body 152 and a first extension member 154. The first case body 152 may be variously configured so long as the first case body 152 forms a plate covering the upper side of the electrode assembly 120. The first extension member 154 may extend downward from the edge of the first case body 152 and may be located outside an outer gasket 174. The shape of the first case 150 and the shape of the second case 160 may correspond to each other. The first case 150 may include a small-width portion and a large-width portion, which are connected to each other to form one part. The first case body 152 may have a plate shape. The width of one side of the first case body 152 in the longitudinal direction thereof may be shorter than the width of the opposite side of the first case body 152 in the longitudinal direction. The first extension member 154 may be formed along the edge of the first case body 152 and may extend downward from the first case body 152. The first case 150 may have an open lower side and may be mounted so as to surround the upper side of the electrode assembly 120. The first case 150 may be mounted in contact with the outer surface of the insulating gasket 170. The first case 150 may include at least one of aluminum, steel, stainless steel, injection-molded plastic, a polymer composite material, and glass fiber reinforced plastic.

The second case 160 may be variously configured so long as the second case 160 is mounted in a shape surrounding the opposite surface of the electrode assembly 120. In some examples, the second case 160 may cover the lower side of the electrode assembly 120. The second case 160 may be variously configured so long as the second case 160 accommodates the electrode assembly 120 and the upper side thereof is covered by the first case 150. The second case 160 may be located beneath the first case 150, and the upper end portion of the second case 160 may be located inside the first case 150.

The second case 160 according to an embodiment of the present disclosure may include a second case body 162 and a second extension member 164. The second case body 162 may be variously configured so long as the second case body 162 forms a plate covering the lower side of the electrode assembly 120. The second extension member 164 may extend upward from the edge of the second case body 162 and may be located between the outer gasket 174 and an inner gasket 172.

The second case 160 may include a small-width portion and a large-width portion, which are connected to each other to form one part. The second case body 162 may have a plate shape. The width of one side of the second case body 162 in the longitudinal direction thereof may be shorter than the width of the opposite side of the second case body 162 in the longitudinal direction. The second extension member 164 may be formed along the edge of the second case body 162 and may extend upward therefrom. The second case 160 may have an open upper side and may be configured so as to surround the lower side of the electrode assembly 120. The second extension member 164 of the second case 160 may be configured so as to be inserted into the insulating gasket 170. The second case 160 may include, for example, at least one of aluminum, steel, stainless steel, injection-molded plastic, a polymer composite material, or glass fiber reinforced plastic.

The electrode assembly 120 may be accommodated in the second case 160, and the first case 150 may cover the upper side of the second case 160 with the insulating gasket 170 interposed therebetween. The vertical length C of the second case 160 may be greater than the vertical length of the electrode assembly 120. Thus, the electrolyte may be supplied to the second case 160 in a state in which the electrode assembly 120 is accommodated in the second case 160. At least one of the first case 150 or the second case 160 may be formed as a conductor.

The electrode assembly 120, the first case 150, and the second case 160 may constitute a secondary battery having an irregular shape, for example, an "L" shape. The electrode assembly 120 may be formed in an "L" shape, and the first case 150 and the second case 160, which surround the outer side of the electrode assembly 120, may also be formed in an "L" shape corresponding to the shape of the electrode assembly 120. The electrode assembly 120, the first case 150, and the second case 160 may be configured into various other shapes, for example, the electrode assembly 120, the first case 150, and the second case 160 may be formed in a shape bent multiple times.

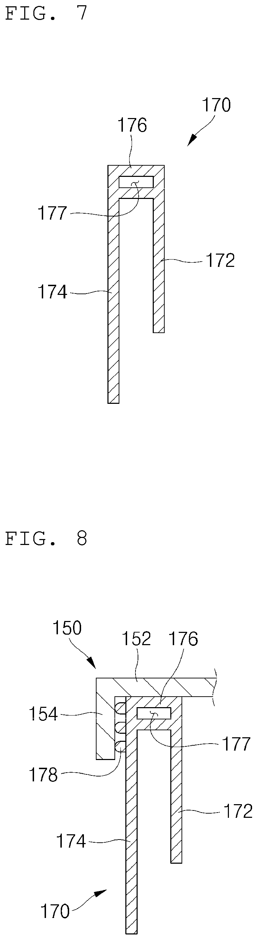

FIG. 6 is a perspective view showing the exemplary insulating gasket 170 according to an embodiment of the present disclosure, and FIG. 7 is a cross-sectional view showing the exemplary insulating gasket 170 according to an embodiment of the present disclosure. As shown in FIGs. 4, 6, and 7, the insulating gasket 170 may be mounted with an interference fit between the first case 150 and the second case 160, which are conductors. The insulating gasket 170 thereby blocks electrical connection between the first case 150 and the second case 160. The first connection tab 130 and the second connection tab 140 may be connected to the first case 150 and the second case 160, respectively, which are electrically disconnected from each other. The insulating gasket 170 may be variously configured so long as the insulating gasket 170 is located between the first case 150 and the second case 160 and is made of an insulative material to block electrical connection between the first case 150 and the second case 160. The insulating gasket 170 may be coupled to at least one of the first case 150 or the second case 160. The insulating gasket 170 may be coupled to an end portion of at least one of the first case 150 or the second case 160. In some examples, the insulating gasket 170 may be mounted in a shape surrounding the upper end portion of the second case 160, thereby blocking electrical connection between the first case 150 and the second case 160. Because the insulating gasket 170 is mounted so as to surround the upper end portion of the second case 160 and the first case 150 is mounted outside the insulating gasket 170, it may be possible to prevent the occurrence of short circuit between the first case 150 and the second case 160. In some examples, the insulating gasket 170 may include an inner gasket 172 abutting the inner surface of the second case 160, an outer gasket 174 abutting the outer surface of the second case 160, and a connection gasket 176 connecting the inner gasket 172 and the outer gasket 174.

The first case 150 and the second case 160 may be coupled to each other in an interference fit with the elastic insulating gasket 170 interposed between the cases 150 and 160. The insulating gasket 170 may be made of an insulative material, and the first case 150 and the second case 160 may be electrically disconnected from each other.

The insulating gasket 170 may include an insulative material to block electrical connection. The insulating gasket 170 may use polypropylene (PP) as a base material and may use polybutylene terephthalate (PBT) for heat resistance. In some examples, the insulating gasket 170 may include at least one of polypropylene, polybutylene terephthalate, polyethylene, ethylene propylene diene terpolymer (EPDM), polyimide, TEFLON^{®}, or polyester.

The outer gasket 174 and the inner gasket 172 may extend in the vertical direction. The upper end of the outer gasket 174 and the upper end of the inner gasket 172 may face each other and may be connected to each other via the connection gasket 176. The insulating gasket 170 may have an inverted U-shaped longitudinal-section having an open lower side. The insulating gasket 170 may be elastic, and may be mounted so as to surround the upper end portion of the second case 160. In some examples, the length A of the outer gasket 174 in the vertical direction may be greater than the length B of the inner gasket 172 in the vertical direction. The outer gasket 174 may prevent contact between the first extension member 154 of the first case 150 and the second extension member 164 of the second case 160. In some examples, the length C of the second case 160 in the vertical direction may be greater than the length A of the outer gasket 174 in the vertical direction. This may mean that the length of the second extension member 164 in the vertical direction is greater than the length A of the outer gasket 174 in the vertical direction. Thus, it is possible to prevent the lower end of the outer gasket 174 from protruding below the second case 160. In some examples, the length A of the outer gasket 174 in the vertical direction may be greater than the length D of the first case 150 in the vertical direction. This may mean that the length A of the outer gasket 174 in the vertical direction is greater than the length of the first extension member 154 in the vertical direction. If the length D of the first case 150 in the vertical direction is greater than the length A of the outer gasket 174 in the vertical direction, the first case 150 may face the second case 160 without the gasket 174 interposed between the cases 150 and 160 such that short circuit may occur. But electrical safety can be ensured by setting the length A of the outer gasket 174 in the vertical direction to be greater than the length D of the first case 150 in the vertical direction. The inner gasket 172 and the outer gasket 174 may be mounted parallel to each other with the second case 160 interposed therebetween.

The insulating gasket 170 may be compressed by movement of the first case 150, and thus the gap between the first case 150 and the second case 160 may be sealed, whereby leakage of the electrolyte is prevented.

Because the upper end portion of the second extension member 164 provided at the second case 160 is inserted into the space defined between the inner gasket 172 and the outer gasket 174, the insulating gasket 170 may be secured to the second case 160.

The first case 150 may move downward while surrounding the upper side of the electrode assembly 120 and may press the insulating gasket 170. The first case 150 may be located outside the outer gasket 174 in an interference fit while compressing the outer gasket 174 of the insulating gasket 170. Because the first case 150 and the second case 160 are mounted in an interference fit with the insulating gasket 170 interposed therebetween, a short circuit caused by contact between the cases 160 and 170 may be prevented. The insulating gasket 170 may be fixed to the end portion of the second case 160 through interference fit, an adhesive, a fastening member, thermal bonding, mechanical coupling, chemical coupling, or the like.

The connection gasket 176 may be variously configured so long as the connection gasket 176 interconnects the upper side of the inner gasket 172 and the upper side of the outer gasket 174. The connection gasket 176 according to an embodiment of the present disclosure may include an inner chamber 177 (see FIG. 7), which is a space for impact absorption. The inner chamber 177 may define a single space or a plurality of partitioned spaces inside the connection gasket 176. When the gasket 170 is mounted, the connection gasket 176 may be positioned between the second case 160 and the first case 150. Because impact transferred to the first case 150 is absorbed by the inner chamber 177 formed in the insulating gasket 170, the durability of the secondary battery 100 may be improved.

FIG. 8 is a cross-sectional view showing the exemplary insulating gasket 170 provided with an outer protrusion 178 according to the present disclosure. As shown in FIG. 8, the insulating gasket 170 may further include an outer protrusion 178. The outer protrusion 178 may be variously configured, and may be, for example, a plurality of protrusions protruding outward from the outer gasket 174 so as to be in contact with the first case 150. For example, the outer protrusion 178 according to an embodiment of the present disclosure may be provided as a plurality of outer protrusions 178 that have a hemispherical shape and are formed on a surface of the outer gasket 174 that faces the first extension member 154 of the first case 150. As a result of the plurality of protrusions 174, frictional force between the first case 150 and the insulating gasket 170 may be increased, whereby separation of the first case 150, which are fixed by an interference fit, may be prevented. Further, the sealing function of the insulating gasket 170 may be enhanced, and, thus, leakage of the electrolyte may be prevented.

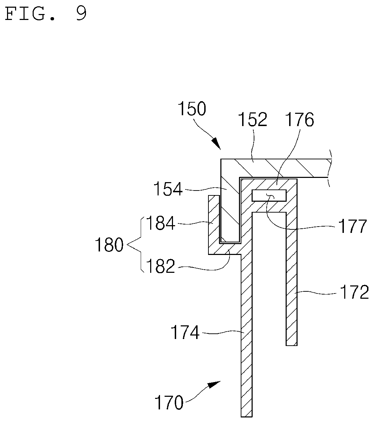

FIG. 9 is a cross-sectional view showing the exemplary insulating gasket 170 provided with a fixing protruding portion 180 according to an embodiment of the present disclosure. As shown in FIG. 9, the insulating gasket 170 may further include a fixing protruding portion 180 protruding outward from the outer gasket 174 so as to surround an end portion of the first case 150. The fixing protruding portion 180 may be variously configured so long as the fixing protruding portion 180 is mounted in a shape surrounding the lower end portion of the first extension member 154 of the first case 150. The fixing protruding portion 180 may include a horizontal protrusion 182 horizontally protruding from the outer gasket 174 and a vertical protrusion 184 extending upward from an end portion of the horizontal protrusion 182 that is located outside the first extension member 154.

The frictional force between the first case 150 and the insulating gasket 170 may increase due to mounting of the fixing protruding portion 180, whereby separation of the first case 150, which is fixed in an interference fit, may be prevented. Further, the sealing function of the insulating gasket 170 may be enhanced, and thus leakage of the electrolyte may be prevented.

According to the present disclosure, the first case 150 and the second case 160 may be coupled to each other in an interference fit without a welding process, which may lower production cost. Further, sealing between the first case 150 and the second case 160 may be improved due to use of the insulating gasket 170, thereby preventing leakage of the electrolyte.

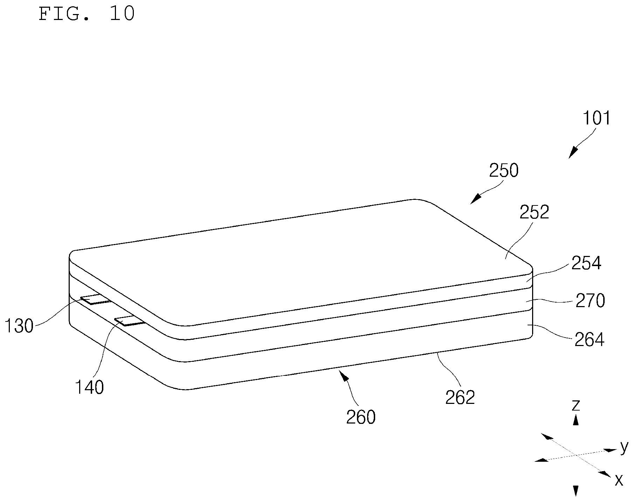

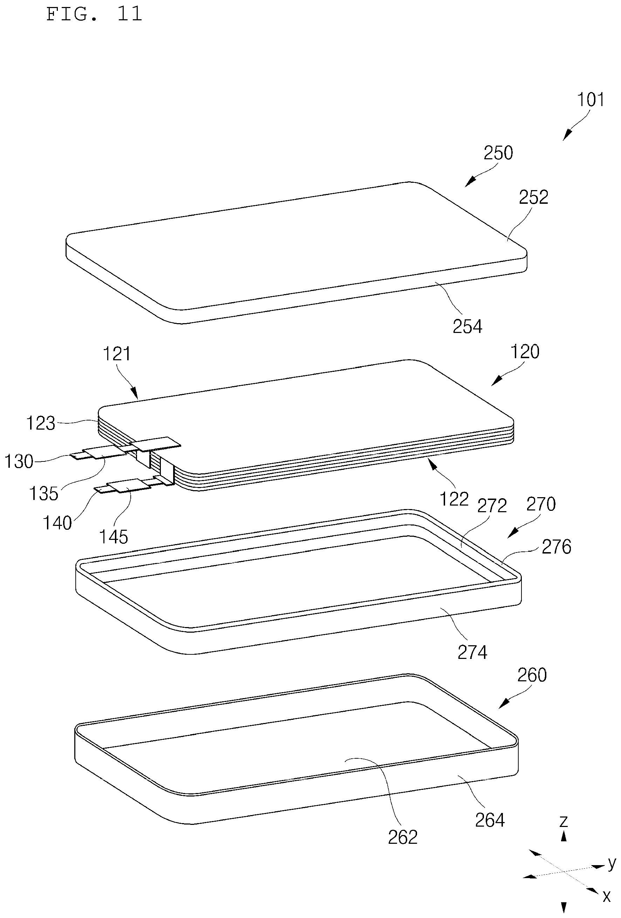

FIG. 10 is a perspective view showing an exemplary secondary battery 101 according to an embodiment the present disclosure, and FIG. 11 is an exploded perspective view of the exemplary secondary battery 101. As shown in FIGs. 10 and 11, the secondary battery 101 may include an electrode assembly 120, a first connection tab 130, a second connection tab 140, a first case 250, a second case 260, an insulating gasket 270, a first insulating tape 135, and a second insulating tape 145. The first case 250, the second case 260, and the insulating gasket 270 of the secondary battery 101 may be modified to have a rectangular shape, but the functions of the secondary battery 101 and its components are identical to the functions of those of the secondary battery 100 according to the above-described embodiment of the present disclosure. Thus, detailed description of the same or similar components will be omitted, and the same or similar components are denoted by the same reference numerals as in the above-described embodiment.

The electrode assembly 120 may be accommodated together with an electrolyte in a space defined by the first case 250 and the second case 260. The electrode assembly 120 may include a first electrode plate 121, a second electrode plate 122, and a separator 123 interposed between the first electrode plate 121 and the second electrode plate 122. The components of the electrode assembly 120 may be stacked in a plate shape. The electrode assembly 120 may be configured such that the first electrode plate 121, the separator 123, and the second electrode plate 122 are stacked in that order. In some examples, the electrode assembly 120 may be configured such that the first electrode plate 121, the second electrode plate 122, and the separator 123, each of which has a substantially rectangular plate shape, are stacked. A plurality of the first electrode plate 121, a plurality of the second electrode plate 122, a plurality of the separator 123 may be provided.

The first case 250 in which the electrode assembly 120 is accommodated may be a rectangular cover having an open lower side. The second case 260 may be formed in the shape of a rectangular container having an open upper side to accommodate the electrode assembly 120.

The first case 250 may include a first case body 252 and a first extension member 254. The first case body 252 may be a rectangular panel. The first extension member 254 may extend downward from the edge of the first case body 252 and may be located outside an outer gasket 274. The first case 250 and the second case 260 may have shapes corresponding to each other.

The second case 260 may include a second case body 262 and a second extension member 264. The second case body 262 may be a rectangular panel. The second extension member 264 may extend upward from the edge of the second case body 262 and may be located outside the outer gasket 274.

The insulating gasket 270 may be formed in a rectangular frame shape corresponding to the shape of the first case 250. The insulating gasket 270 may include an inner gasket 272 abutting the inner surface of the second case 260, an outer gasket 274 abutting the outer surface of the second case 260, and a connection gasket 276 interconnecting the inner gasket 272 and the outer gasket 274. The inner gasket 272, the outer gasket 274, and the connection gasket 276 may be formed in a rectangular shape.

The first connection tab 130 may be electrically connected to the first case 250 or may be led out to outside of the first case 250. The second connection tab 140 may be electrically connected to the second case 260 or may be led out to outside of the first case 250.

The battery according to the above-described embodiment may be used to manufacture a battery pack.

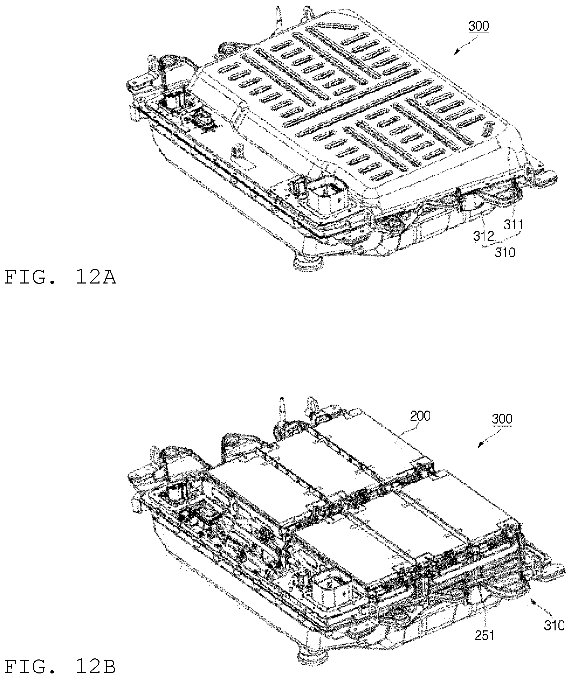

FIGs. 12A and 12B are perspective views showing a battery pack that may include the exemplary secondary battery 100 or 101 according to the present disclosure. Referring to FIGs. 12A and 12B, the battery pack 300 may include a plurality of battery modules 200 and a housing 310 to accommodate the plurality of battery modules 200. For example, the housing 310 may comprise a first and a second housing 311, 312 that are coupled in facing directions with the plurality of battery modules 200 interposed between them. The plurality of battery modules 210 can be electrically connected to each other using a bus bar 251, and the plurality of battery modules 200 can be electrically connected in series/parallel or a mixed series-parallel manner to obtain the required electrical output. In the drawings, for the sake of convenience, components such as bus bars, cooling units, and external terminals for the electrical connection of battery cells are omitted. In some embodiments, the battery pack 300 can be mounted on a vehicle. The vehicle may be, for example, an electric vehicle, a hybrid vehicle, or a plug-in hybrid vehicle. The vehicle can include both four-wheel and two-wheel vehicles.

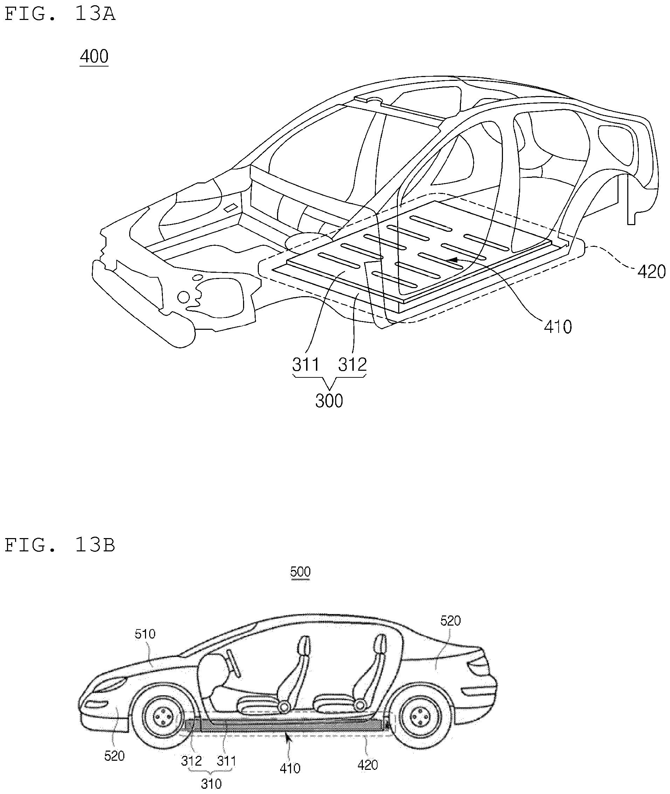

FIGs. 13A and 13B are, respectively, a perspective view and a side view showing a vehicle body 400 and a vehicle 500 including the exemplary battery pack 300 according to the present disclosure.

In FIG. 13A, the battery pack 300 may include a battery pack cover 311, which is part of the vehicle underbody 410 and may correspond to the first housing, and a pack frame 312, which is placed beneath the vehicle underbody 410 and may correspond to the second housing. The battery pack cover 311 and pack frame 312 may be structurally integrated with the vehicle floor 420. The vehicle underbody 410 separates the interior and exterior of the vehicle, and the pack frame 312 may be positioned outside the vehicle.

As shown in FIG. 13B, the vehicle 500 can be assembled with additional components such as a hood 510 at the front of the vehicle body 400 and fenders 520 located at the front and rear of the vehicle. The vehicle 500 includes the battery pack 300 comprising the battery pack cover 311 and the pack frame 312, and the battery pack 300 can be coupled to the vehicle body part 400.

As is apparent from the above description, according to the present disclosure, a first case and a second case may be coupled to each other with an interference fit without a welding process, leading to reduced production cost.

According to the present disclosure, sealing between the first case and the second case may be improved due to use of an insulating gasket, and, thus, leakage of an electrolyte is prevented.

However, the technical effects to be achieved in the embodiment of the disclosure are not limited to the technical problems mentioned above, and those skilled in the art to which the disclosure belongs will clearly understand other technical effects not mentioned herein from the above description.

Although a few embodiments of the present disclosure have been shown and described, it would be appreciated by those skilled in the art that various changes and modifications may be made without departing from the principles of the disclosure.

## Claims

1. A secondary battery (100) comprising:
an electrode assembly (120) comprising a first electrode plate (121), a second electrode plate (122), and a separator (123);
a first case (150) surrounding a first surface, preferably an upper surface, of the electrode assembly (120);
a second case (160) surrounding a second surface, preferably a lower surface, of the electrode assembly (120) that is opposite to the first surface of the electrode assembly (120); and
an insulating gasket (170) positioned between the first case (150) and the second case (160) and coupled to at least one of the first case (150) or the second case (160),
wherein the first case (150) and the second case (160) are coupled to each other with an interference fit with the insulating gasket (170) interposed between the first case (150) and the second case (160).

2. The secondary battery (100) as claimed in claim 1, wherein the insulating gasket (170) is elastic and deformable by an external force; and/or wherein the insulating gasket (170) comprises at least one of polypropylene, polybutylene terephthalate, polyethylene, ethylene propylene diene terpolymer (EPDM), polyimide, polytetrafluoroethylene, or polyester.

3. The secondary battery (100) according to any of the previous claims, wherein the electrode assembly (120) is accommodated in the second case (160), and
wherein the first case (150) covers an upper side of the second case (160) with the insulating gasket (170) interposed between the upper side of the second case (160) and the first case (150).

4. The secondary battery (100) according to any of the previous claims, wherein a length (C) of the second case (160) in a vertical direction is greater than a length of the electrode assembly (120) in the vertical direction, the vertical direction being a direction of the normal vector of the first and/or second surface of the electrode assembly (120).

5. The secondary battery (100) according to any of the previous claims, wherein the insulating gasket (170) is fixed on an upper end portion of the second case (160); and/or wherein the insulating gasket (170) is made of an insulative material, and
wherein the first case (150) and the second case (160) are electrically disconnected from each other.

6. The secondary battery (100) according to any of the previous claims, wherein the insulating gasket (170) comprises:
an inner gasket (172) abutting an inner surface of the second case (160);
an outer gasket (174) abutting an outer surface of the second case (160); and
a connection gasket (176) connecting the inner gasket (172) and the outer gasket (174).

7. The secondary battery (100) according to the previous claim, wherein a length of the outer gasket (174) in a vertical direction is greater than a length of the inner gasket (172) in the vertical direction, the vertical direction being a direction of the normal vector of the first and/or second surface of the electrode assembly (120).

8. The secondary battery (100) according to claim 6 or 7, wherein the first case (150) comprises:
a first case body (152) configured to cover the first surface of the electrode assembly (120); and
a first extension member (154) extending towards the second case (160) from an edge of the first case body (152) and positioned outside the outer gasket (174).

9. The secondary battery (100) according to any of claims 6 to 8, wherein the second case (160) comprises:
a second case body (162) configured to cover the second surface of the electrode assembly (120); and
a second extension member (164) extending towards the first case (150) from an edge of the second case body (162) and positioned between the outer gasket (174) and the inner gasket (172).

10. The secondary battery (100) according to any of claims 6 to 9, wherein the insulating gasket (170) further comprises a plurality of protrusions (178) protruding outward from the outer gasket (174) and contacting the first case (150).

11. The secondary battery (100) according to any of claims 6 to 10, wherein the insulating gasket (170) further comprises a fixing protruding portion (180) protruding outward from the outer gasket (174) and surrounding an end portion of the first case (150).

12. The secondary battery (100) according to any of the previous claims, wherein at least one of the first case (150) or the second case (160) is a conductor; and/or wherein the first case (150) and the second case (160) comprise at least one of steel, stainless steel, nickel-plated steel, a steel alloy, aluminum, an aluminum alloy, a laminated film, or plastic.

13. The secondary battery (100) according to any of the previous claims, wherein the secondary battery further comprises:
a) a first connection tab (130) electrically connected to the first electrode plate (121); and
a first insulating tape (135) attached to an outer side of the first connection tab (130); and/or
b) a second connection tab (140) electrically connected to the second electrode plate (122); and
a second insulating tape (145) attached to an outer side of the second connection tab (140).

14. The secondary battery (100) as claimed in claim 13,
a) wherein the first connection tab (130) and the first insulating tape (135) are positioned between the first case (150) and the insulating gasket (170), and
wherein an end portion of the first connection tab (130) extends to outside of the first case (150); and/or
b) wherein the second connection tab (140) and the second insulating tape (145) are positioned between the first case (150) and the insulating gasket (170), and
wherein an end portion of the second connection tab (140) extends to outside of the first case (150).

15. The secondary battery (100) according to any of the previous claims, wherein the electrode assembly (120), the first case (150), and the second case (160) are formed in an "L" shape.
